# EUROPEAN PATENT APPLICATION

(11) **EP 2 826 948 A2**
(43) Date of publication of application: **21.01.2015**
(21) Application number: 14275151.0
(22) Date of filing: 14.07.2014
(51) Int. Cl.: E21B 17/00

(54) **RFID connection sleeve**

(30) Priority: 15.07.2013 US 201361846440 P
(71) Applicant: Axon EP, Inc., Houston, TX 77095 (US)
(72) Inventor: Pacheco, Cain Perez, Houston, TX Texas 77056 (US)
(74) Representative: de Kernier, Gabriel

(57) **Abstract**

An RFID connection sleeve assembly comprising an RFID tag (102), a sleeve (100), and a tool, wherein the RFID tag is mounted to the sleeve and wherein the sleeve is secured to the tool by threaded connection (104).

## Description

### BACKGROUND

Radio-frequency identification (RFID) is the use of a wireless non-contact system that uses radio-frequency electromagnetic fields to transfer data from an RFID tag attached to an object, for the purposes of automatic identification and tracking. Some RFID tags require no battery and are powered by the electromagnetic fields used to read them. Others use a local power source and emit radio waves (electromagnetic radiation at radio frequencies). The RFID tag contains electronically stored information which can be read from up to several feet away. Unlike a bar code, the RFID tag may be embedded in the tracked object or otherwise obscured.

RFID tags are used in many industries. For example, in the oil and gas industry, RFID tags are used to track assets used in downhole operations. However, conventional RFID tags are not designed for operations in harsh subterranean environments. Furthermore, conventional asset tracking methods may not be suitable for use in subterranean environments. Additionally, assets used in downhole operations may not be suitable for integration with certain RFID tags. Such assets may not have the proper thickness, the proper dimensions, or a large enough section for receiving an RFID tag suitable for subterranean environments.

There is a need for an improved system and method for integrating an RFID tag suitable for subterranean environments with assets used in downhole operations.

### SUMMARY

It is an object of the present invention to provide an improved system and method for integrating an RFID tag suitable for subterranean environments with assets used in downhole operations. More particularly, the present invention allows for mounting RFID tags to assets used in downhole operations with a variety of dimensions and thicknesses.

In one embodiment, the present disclosure provides an RFID connection sleeve assembly comprising an RFID tag, a sleeve, and a tool, wherein the RFID tag is mounted to the sleeve and wherein the sleeve is secured to the tool. The RFID tag may be mounted to the sleeve by means of a cavity formed in the sleeve. A cavity may be formed by means of milling a slot for receiving the RFID tag. The RFID tag and/or cavity may be constructed in such a manner as to allow the tag to be mounted in the cavity by means of physical or mechanical forces.

In another embodiment, the RFID tag may be mounted to the sleeve by means of an adhesive and/or an overlying protective coating, such as a thermoplastic material or epoxy material. In yet another embodiment, an adhesive and/or an overlying protective coating may be used to secure an RFID tag in a cavity formed in the sleeve.

In another embodiment, the sleeve may be secured to the tool by means of a threaded connection. One or more threads may be located on the outside of the tool. The one or more threads may be integrated into a tool by means of a milling process. The sleeve may have one or more threads located on the inside of the sleeve that are configured to connect the sleeve to the tool by means of a threaded connection.

In another embodiment, the sleeve may be secured to the tool by means of physical and/or mechanical forces. As an example, the sleeve and tool may be connected through one or more interlocking grooves. In one embodiment, one or more grooves may be integrated into the outside surface of the tool, such as through a milling process. The sleeve may comprise one or more connection components that are configured to mate with the one or more grooves and form an interlocking connection. In another embodiment, one or more grooves may be integrated into the inside surface of the sleeve, such as through a milling process. The tool may comprise one or more connection components that are configured to mate with the one or more grooves and form an interlocking connection.

In another embodiment, the sleeve may be secured to the tool by means of an adhesive. The adhesive may be applied to the outside of the tool and/or the inside of the sleeve.

In another embodiment, the sleeve may be secured to the tool by means of one or more external screws. In one embodiment, the one or more screws may be configured in a radial direction relative to the center of the tool and pass through both the sleeve and the surface of the tool. In another embodiment, the one or more screws may be configured in a tangential direction relative to the surface of the sleeve and/or the surface of the tool. The one or more screws may by connected to a clamping mechanism that secures the sleeve to the tool through physical or mechanical forces.

### BRIEF DESCRIPTION OF THE DRAWINGS

A more complete and thorough understanding of the present embodiments and advantages thereof may be acquired by referring to the following description taken in conjunction with the accompanying drawings.
Figure 1 is an illustration of an RFID connection sleeve in accordance with certain embodiments of this disclosure.
Figure 2 is an illustration of a cross-sectional profile of an RFID connection sleeve in accordance with certain embodiments of this disclosure.
Figure 3 is an illustration of a cut-away section view of an RFID connection sleeve in accordance with certain embodiments of this disclosure.
Figure 4 is an illustration of a RFID connection sleeve assembly in accordance with certain embodiments of this disclosure.

While embodiments of this disclosure have been depicted and described and aspect of the present disclosure are defined by reference to exemplary embodiments of the disclosure, such references do not imply a limitation on the disclosure, and no such limitation is to be inferred. The subject matter disclosed is capable of considerable modification, alteration, and equivalents in form and function, as will occur to those skilled in the pertinent art and having the benefit of this disclosure. The depicted and described embodiments of this disclosure are examples only, and not exhaustive of the scope of the disclosure.

### DETAILED DESCRIPTION

Illustrative embodiments of the present disclosure are described in detail herein. In the interest of clarity, not all features of an actual implementation may be described in this specification. It will of course be appreciated that in the development of any such actual embodiment, numerous implementation specific decisions must be made to achieve the specific implementation goals, which will vary from one implementation to another. Moreover, it will be appreciated that such a development effort might be complex and time-consuming, but would nevertheless be a routine undertaking for those of ordinary skill in the art having the benefit of the present disclosure. To facilitate a better understanding of the present disclosure, the following examples of certain embodiments are given. In no way should the following examples be read to limit, or define, the scope of the disclosure.

The present invention relates to combining RFID tags suitable for use in subterranean environments with assets used in downhole operations. Some assets used in downhole operations may not be readily suitable for integration with certain RFID tags in a manner suitable for use in a downhole environment. Such assets may not have the proper thickness, the proper dimensions, or a large enough section for receiving an RFID tag suitable for subterranean environments.

More particularly, the present invention relates an improved system and method for integrating an RFID tag suitable for subterranean environments with assets used in downhole operations.

There may be additional advantages of integrating RFID tags suitable for subterranean environments with assets used in downhole operations in the manner disclosed herein. One of the many potential advantages of the systems and methods disclosed herein is that they may allow for the tracking of assets in subterranean formations under conditions where conventional RFID tags would fail and/or in conditions where a tool is not readily configurable to receive an RFID tag in a manner suitable for downhole environments.

In certain embodiments, the RFID tags disclosed herein are designed to survive the harshest drilling and subsea environments. Certain embodiments of the RFID tags disclosed herein may be specifically designed for oil and gas drilling operations. Such specific designs may include a core internal RFID circuitry and reinforced circuit board, customized enclosure and materials design, and an improved installation method. The RFID tags can be integrated with various down-hole assets, such as, for example, drill pipes, Heavy Weight Drill Pipe ("HWDP"), subs, drilling jars, OCTG Casing and Tubing configured as Threaded and Coupled (T&C), Flush Joint or Semi-Flush Joint, subs, pup joints, and other OCTG or BHA components, and other components. The design of the RFID tag disclosed herein allows it to survive continuous exposure to corrosive elements, severe vibration, high pressures, and temperatures to 400°F (∼200°C). Its antenna design and architecture allows accurate readings through accumulated sediments and thick drilling mud.

Other potential benefits of using the methods disclosed herein include having a unique electronic identification of assets, eliminating the need for asset stenciling, allowing tracking of multiple assets in harsh conditions and environments, eliminating data entry or hand writing processes, improving the efficiency of maintenance, inspection, and business processes, providing cost effective and long lasting solutions to tracking needs, and eliminating the need for maintenance on the tags.

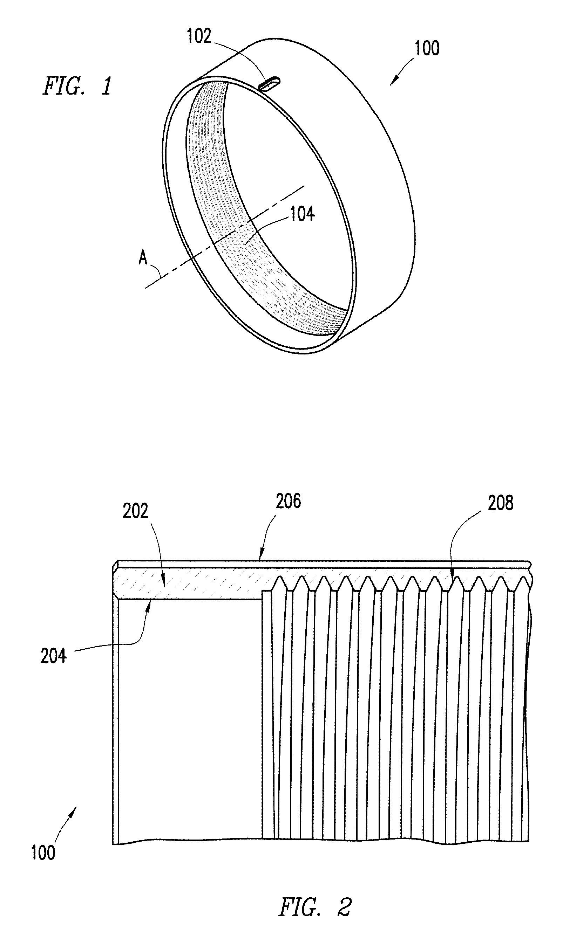

In one embodiment, the present disclosure provides an RFID connection sleeve assembly comprising an RFID tag, a sleeve, and a tool, wherein the RFID tag is mounted to the sleeve and wherein the sleeve is secured to the tool. Figure 1 is an illustration of an RFID connection sleeve in accordance with certain embodiments of this disclosure which is denoted generally with reference numeral 100. The sleeve 100 may further comprise a cavity 102 formed on the outside surface of the sleeve for receiving an RFID tag. As shown in Figure 1, the cavity 102 may pass through the entire thickness of the sleeve 100. Alternatively, the cavity 102 may comprise a depth that is less than the thickness of the sleeve 100. As shown in Figure 1, the sleeve 100 may also comprise one or more threads 104. As shown in Figure 1, the one or more threads 104 may be located on the inside surface of the sleeve 100. As further shown in Figure 1, the one or more threads 104 may extend inward from the edge of the sleeve 100 only part of the length of the sleeve 100. Alternatively, the threads 104 may extend inward from the edge of the sleeve 100 the entire length of the sleeve 100.

Figure 2 is an illustration of a cross-sectional profile of the RFID connection sleeve 100 in accordance with certain embodiments of this disclosure along the dotted line A of figure 1. In accordance with certain embodiments, the sleeve 100 may comprise a counterbore section 202 with an inside diameter 204 and an outside diameter 206, and an internal fastening method 208. In certain implementations, the internal fastening method 208 may comprise one or more threads 104 located on the inside diameter 204 of the sleeve 100. One or more threads may be located on the outside diameter of a tool and configured to receive the one or more threads 104 located on the inside diameter 204 of the sleeve 100 forming a threaded connection.

In certain embodiments, the internal fastening method 208 may comprise one or more grooves located on the inside diameter 204 of the sleeve 100. The tool may comprise one or more matching connection components located on the outside diameter of the tool that are configured to mate with the one or more grooves located on the inside diameter 204 of the sleeve 100. The one or more matching connection components serve as counterparts to the one or more grooves to form an interlocking connection. The connection components may be machined on the outside diameter of the tool.

The tool may be one of various down-hole components, such as OCTG Casing and Tubing configured as Threaded and Coupled (T&C), Flush Joint or Semi-Flush Joint, subs, pup joints, and other OCTG or BHA components, drill pipe, HWDP, subs, drilling jars, couplings, and other components having a matching counterpart that is configured to connect the sleeve 100 to the tool by means of a threaded connection.

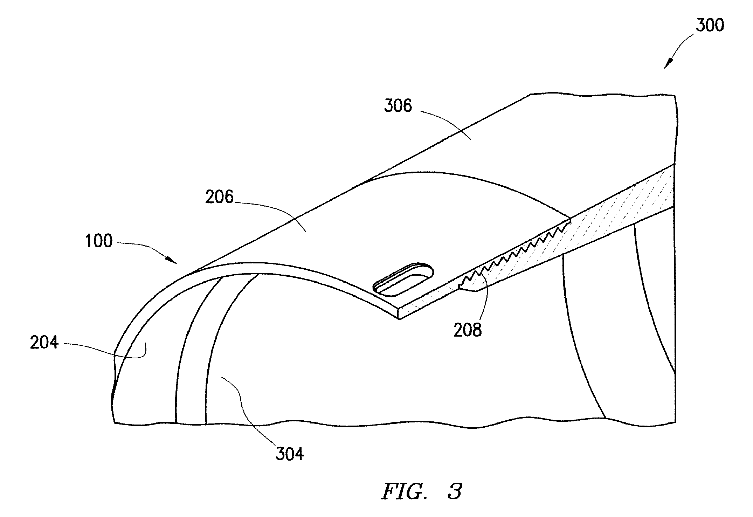

Figure 3 is an illustration of a cut-away section view of an RFID connection sleeve 100 in accordance with certain embodiments of this disclosure showing the sleeve 100 when it is coupled to a tool 300. As shown in Figure 3, the outside diameter 206 of the sleeve 100 may be flush to an outside diameter 306 of the tool 300. As shown in Figure 3, the tool 300 and/or sleeve 100 may be configured so that the connection of the sleeve 100 to the tool 300 by means of the internal fastening 208 results in an assembly with a substantially uninterrupted surface between an outside diameter 206 of the sleeve 100 and an outside diameter 306 of the tool 300. In another embodiment, a second tool (not shown) may be combined with the RFID connection sleeve assembly 100 so as to form a substantially uninterrupted surface between an outside diameter 306 of the first tool 300, an outside diameter 206 of the sleeve 100, and an outside diameter of the second tool (not shown).

In certain embodiments, an inside diameter 204 of the sleeve 100 may be flush to an inside diameter 304 of the tool 300. The tool 300 and/or sleeve 100 may be configured so that the connection of the sleeve 100 to the tool 300 by means of the internal fastening 208 results in an assembly with a substantially uninterrupted surface between an inside diameter 204 of the sleeve 100 and an inside diameter 304 of the tool 300. In another embodiment, a second tool (not shown) may be combined with the RFID connection sleeve assembly 100 so as to form a substantially uninterrupted surface between an inside diameter 304 of the first tool 300, an inside diameter 204 of the sleeve 100, and an inside diameter of the second tool (not shown).

In another embodiment, the sleeve may be flush with or matching the diameter of the counterbore diameter of the tool. The outside end of the sleeve component of the RFID connection sleeve assembly may be flush with the end of the tool comprising the thread exit. The RFID connection sleeve assembly may further comprise a thickness between the outside diameter of the sleeve and the inside diameter of the tool substantially equal to the thickness of a comparable unmodified tool. In one embodiment, a second tool may be combined with the RFID connection sleeve assembly so as to form a substantially uninterrupted surface between an inside diameter of the first tool and an inside diameter of the second tool. The sleeve may comprise a variety of lengths depending on the tool.

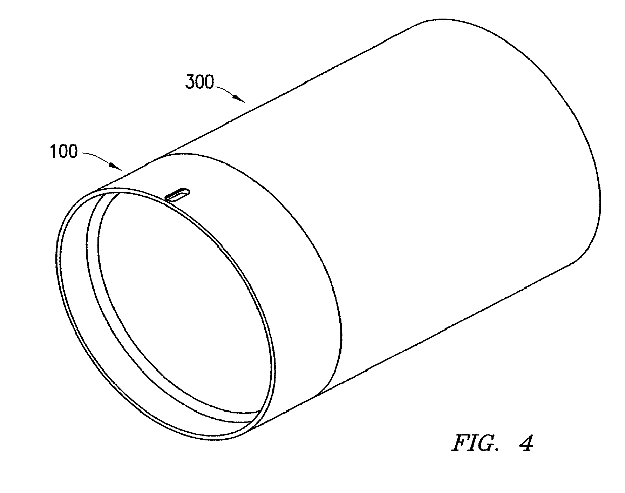

Figure 4 is an illustration of a RFID connection sleeve assembly in accordance with certain embodiments of this disclosure showing the sleeve 100 connected to a tool 300. In one embodiment, the sleeve may have the same bearing face as the coupling, allowing the RFID connection sleeve assembly to be readily utilized and interacted with by other tools and/or machines used in the oil and gas industry, such as drilling elevators and the like.

Although the present invention and its advantages have been described in detail, it should be understood that various changes, substitutions and alternations can be made herein without departing from the spirit and scope of the invention as defined by the following claims.

Therefore, the present disclosure is well adapted to attain the ends and advantages mentioned as well as those that are inherent therein. The particular embodiments disclosed above are illustrative only, as the present disclosure may be modified and practiced in different but equivalent manners apparent to those skilled in the art having the benefit of the teachings herein. Even though the figures depict embodiments of the present disclosure in a particular orientation, it should be understood by those skilled in the art that embodiments of the present disclosure are well suited for use in a variety of orientations. Accordingly, it should be understood by those skilled in the art that the use of directional terms such as above, below, upper, lower, upward, downward and the like are used in relation to the illustrative embodiments as they are depicted in the figures, the upward direction being toward the top of the corresponding figure and the downward direction being toward the bottom of the corresponding figure.

Furthermore, no limitations are intended to the details of construction or design herein shown, other than as described in the claims below. It is therefore evident that the particular illustrative embodiments disclosed above may be altered or modified and all such variations are considered within the scope and spirit of the present disclosure. Also, the terms in the claims have their plain, ordinary meaning unless otherwise explicitly and clearly defined by the patentee. The indefinite articles "a" or "an," as used in the claims, are defined herein to mean one or more than one of the element that the particular article introduces; and subsequent use of the definite article "the" is not intended to negate that meaning.

## Claims

1. An RFID connection sleeve assembly comprising:
an RFID tag;
a sleeve; and
a first tool, wherein the RFID tag is mounted to the sleeve and wherein the sleeve is secured to the first tool.

2. The RFID connection sleeve assembly of claim 1, wherein the sleeve is secured to the first tool with a threaded connection or a grooved connection.

3. The RFID connection sleeve assembly of claim 1, further comprising a second tool, wherein the sleeve is secured to the second tool.

4. An RFID connection sleeve comprising:
an RFID tag; and
a sleeve, wherein the sleeve comprises a cavity for receiving the RFID tag, and an internal fastening operable to secure the sleeve to a first tool.

5. The RFID connection sleeve of claim 4, wherein the internal fastening comprises one or more threads located on an inside diameter of the sleeve and one or more threads located on an outside diameter of the first tool.

6. The RFID connection sleeve of claim 4, wherein the internal fastening comprises one or more grooves located on an inside diameter of the sleeve and one or more connection components located on an outside diameter of the first tool configured to mate with the one or more grooves.

7. The RFID connection sleeve of claim 4, wherein the internal fastening comprises one or more grooves located on an outside diameter of the first tool and one or more connection components located on an inside diameter of the sleeve configured to mate with the one or more grooves.

8. The RFID connection sleeve of claim 1 or claim 4, wherein the sleeve comprises a first inside diameter and the first tool comprises a second inside diameter and wherein the first inside diameter is flush with the second inside diameter.

9. The RFID connection sleeve of claim 1 or claim 4, wherein the sleeve comprises a first outside diameter and the first tool comprises a second outside diameter and wherein the first outside diameter is flush with the second outside diameter.

10. The RFID connection sleeve of claim 4, wherein the internal fastening is further operable to secure the sleeve to a second tool.

11. A method for tracking an asset, comprising:
providing a sleeve with a cavity;
mounting an RFID tag in the cavity; and
securing the sleeve to a first asset.

12. The method for tracking an asset of claim 11, wherein securing the sleeve to the first asset comprises interleaving one or more threads located on an inside diameter of the sleeve with one or more threads located on an outside diameter of the first asset.

13. The method for tracking an asset of claim 11, wherein securing the sleeve to the first asset comprises mating one or more grooves located on an inside diameter of the sleeve with one or more connection components located on an outside diameter of the first asset.

14. The method for tracking an asset of claim 11, further comprising securing the sleeve to a second asset.

15. The method of claim 11, wherein the first asset is a downhole tool selected from a group consisting of: OCTG Casing and Tubing configured as Threaded and Coupled (T&C), Flush Joint or Semi-Flush Joint, subs, pup joints, and other OCTG or BHA components, a drill pipe, a heavy weight drill pipe, a sub, and a drilling jar.
